# EUROPEAN PATENT APPLICATION

(11) **EP 0 980 181 A1**
(43) Date of publication of application: **16.02.2000**
(21) Application number: 99114910.5
(22) Date of filing: 30.07.1999
(51) Int. Cl.: H04N 5/232, H04N 5/225

(54) **Device and method for stabilizing the image in a monitor during the roll movement of a telecamera or cinecamera**

(30) Priority: 13.08.1998 IT MI981893
(71) Applicant: Movie Engineering srl, 20100 Milano (IT)
(72) Inventor: Basilico, Paolo, 20020 Solaro (MI) (IT)
(74) Representative: Petruzziello, Aldo

(57) **Abstract**

A system for stabilizing the image (20) in a monitor (4) during the ROLL movement of a telecamera or cinecamera (1), comprising stabilizing means for obtaining rotation of the image (20) around an axis (Y) substantially at right angles to the display (25) of the monitor (4), thus avoiding the occurrence of rotation of the subject (21) framed by the telecamera during the roll movement of the telecamera (1); these stabilizing means being piloted by movement detectors (12) able to detect the ROLL movement of the telecamera (1), in order to impart a corresponding movement to the image (20).

## Description

The present invention concerns a device and method for stabilization of the image in a monitor during the ROLL movement of a telecamera or cinecamera.

During the shooting of videos or the production of motion pictures, the operator needs to carry out movements to follow the subject to be filmed. These movements are generally called PAN (horizontal panning) and TILT (vertical panning).

Lately there has been an increase in shots in which use is made of a third movement called ROLL which consists in a rotational movement around the optical axis of the shot. This is not usually a movement that serves to follow the subject, but a movement that makes the shot more dynamic. Said movement is ergonomically different from PAN and TILT which have a parallel in the physiology of the human body. In fact, the eyes are able to move both horizontally and vertically but are unable to make a ROLL movement. Only the head, through somewhat unnatural movements of the neck, can make limited ROLL movements. Thus this movement is more complex to manage even for an operator, though accustomed to working with an image. Shots with a more or less accentuated ROLL movement are fairly common in that they serve to arouse the interest of the audience precisely because they are less natural.

To make this movement, at present, the operator is therefore obliged to rotate both the telecamera and the lens on the optical axis.

For this reason motorized mounts for telecameras have been developed. These mounts were previously designed for movements on two axes (PAN and TILT). Now, however, motorized mounts for the ROLL movement are increasingly common. In the majority of cases a motorized mechanism has been added that allows precisely the ROLL movement. In other cases the remote heads have been redesigned, to meet the increased size and weight characteristics introduced by the new movement.

The operator currently handles telecameras that have the viewfinder integral with the sensor of the lens and therefore what is seen in the viewfinder is not the same effect that the final user of the image will see.

What the operator sees, during the ROLL movement, is actually the rotation of the frame of the viewfinder, inside which is the framed subject, around said framed subject, which, however, remains fixed.

Purely by way of example, the viewfinder can be compared to a hole through which the operator frames the subject. In fact, on rotating the telelecamera, the operator sees the "hole" rotate but not the content thereof.

However, during rotation of the telecamera, a person who sees the image of the subject being filmed on a fixed monitor not integral with the telecamera sees the subject rotate and the horizon of said subject tilt at an angle equal to that imparted by the operator to the telecamera.

Rotation in a clockwise direction is conventionally considered positive, therefore both the angle generated by clockwise rotation of the telecamera by the operator with respect to a horizontal plane and the angle generated by clockwise rotation of the image with respect to the monitor in which it appears are considered as positive.

A rotation of the telecamera in a positive (clockwise) direction will correspond to a rotation of the same entity but negative (anticlockwise) of the subject in the monitor. This can easily be understood by remembering that a person looking at the monitor looks at it from the front, whereas the operator holds the camera from behind.

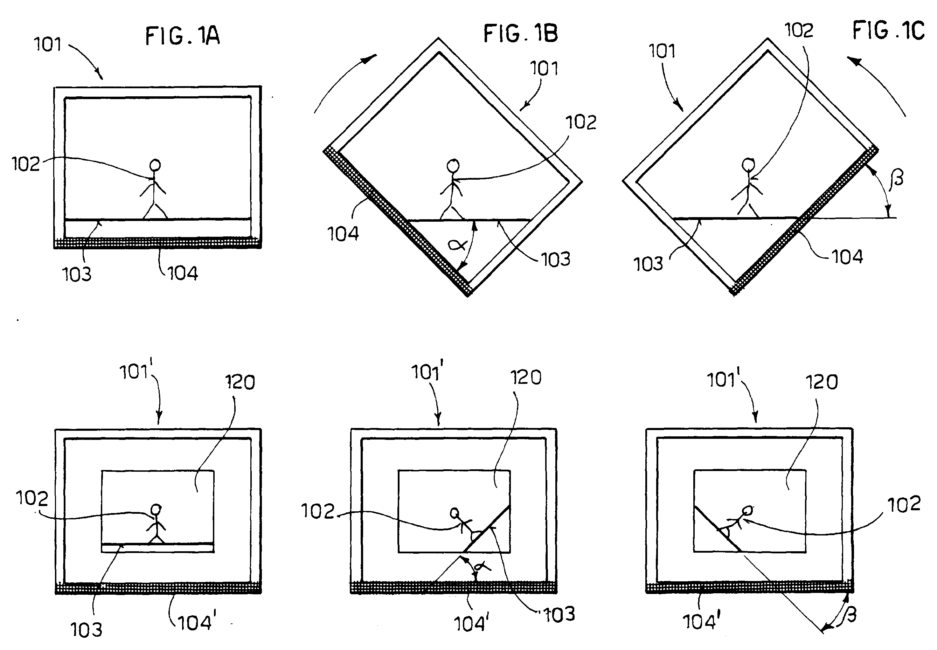

With reference to the examples in Figs. 1A-1C, 101 denotes a viewfinder integral with a telecamera and 101' denotes a remote monitor connected to the telecamera; the telecamera integral with the viewfinder 101 can be rotated around the optical filming axis, whereas the remoted monitor 101' is fixed. For greater clarity the bottom edges 104, 104' of the viewfinder 101 and the monitor 101' have been shaded.

In Figure 1A there is a starting position in which the viewfinder 101 frames a subject 102 on a horizontal plane 103, substantially parallel to the bottom edge 104 of the viewfinder 101. In the remote monitor 101' there appears a rectangular image 120 in which the horizontal 103 of the subject 102 is parallel to the bottom edge 104' of the monitor 101'.

With reference to Figure 1B, a ROLL movement is made by imparting a clockwise rotation to the telecamera integral with the viewfinder 1. The bottom edge 104 of the viewfinder 101 moves by a positive angle α with respect to the horizontal 103 with remains fixed. Accordingly, in the remoted monitor 101' the horizontal 103 moves by a negative (anticlockwise) angle α with respect to the lower edge 104' of the monitor 101'.

With reference to Figure 1C, an anticlockwise rotation is imparted to the telecamera integral with the viewfinder 101. The lower edge 104 of the viewfinder 101 moves by a negative angle β with respect to the horizontal 103 which remains fixed. Accordingly, in the remote monitor 101', the horizontal 103 moves by a positive angle (clockwise) β with respect to the lower edge 104' of the monitor 101'.

From this description it is evident that in the case of the control monitor not being integral with the telecamera during the roll movement of the telecamera, the operator in front of the monitor has difficulty in following the framed subject, which rotates inside the image that appears on the display of the monitor. Furthermore this rotation of the framed subject inside the image seen on the display of the monitor proves to condition the other movements of the telecamera; in fact a 90° rotation of the telecamera around the ROLL axis causes the PAN movement in the image that appears on the display to be exchanged for a TILT movement.

The object of the invention is to eliminate these drawbacks by providing a system for stabilization of the image during the ROLL movement of a telecamera or cinecamera, that allows the same image that the operator sees in the viewfinder of the telecamera to be obtained in a monitor physically separated from the telecamera.

A further object of the invention is to provide such a system for stabilization of the image in the monitor that is economical and simple to make.

These objects are achieved in accordance with the invention with the characteristics listed in the appended independent claims 1 and 10. Preferred embodiments of the invention are apparent from the dependent claims.

The system for stabilizing the image in a monitor during the ROLL movement of a telecamera or cinecamera, according to the invention, consists in avoiding the rotation of the subject inside the image that appears on the display of a remote monitor during the ROLL movement of the telecamera.

A first solution is to make the remote monitor physically rotate around an axis at right angles to the plan of the screen and coinciding with the center of the image. This can preferably be achieved by mounting the monitor on a rotatable, motorized mount. Clearly the rotatation of the remote monitor must be equal to the rotation imparted to the telecamera for the ROLL movement, so as to simulate a situation in which the monitor is integral with the telecamara. It is therefore sufficient to provide a motor, for the mount of the remote monitor, driven by an encoder set in phase with the motor that drives the mount of the telecamera to impart the ROLL movement or controlled by movement detectors that detect the ROLL movement of the telecamera.

Another solution is to make the image that appears in the monitor rotate electronically around the center thereof. For this purpose image processing devices within the reach of a skilled in the art must be provided such as to impart to the image in the monitor a rotation equal to that imparted to the telecamera during the ROLL movement.

Clearly an image of such a size as not to occupy the entire surface of the monitor must be provided, otherwise, a part of the image would be cut during rotation thereof. In order not to have any cutting of the image, provision must be made for it to be contained in a rectangle the diagonal of which is at most equal to the shorter side of the display of the monitor. Embodiments can nevertheless be provided in which the image is partially cut at the corners during rotation, or is dynamically made smaller to avoid cutting of the corners. Embodiments can also be provided in which there is a substantially circular display and image surface, so that rotation of the surface of the image does not cause any cutting thereof.

Further characteristics of the invention will be made clearer by the detailed description that follows, referring to purely exemplary and therefore non-limiting embodiments thereof illustrated in the appended drawings in which:
Figures 1A-1C are diagrammatic illustrative views of a subject as it appears framed in a viewfinder integral with a telecamera and at the same time inside the display of a monitor physically separate from the telecamera;
Figure 2 is a diagrammatic overall view of the apparatus according to the invention in a first embodiment;
Figures 2A and 2B are diagrammatic views of a monitor, illustrating the modality of correction of the image therein, according to the first embodiment of the invention;
Figure 3 is a diagrammatic view of a second embodiment;
Figures 3A and 3B are diagrammatic views of the screen of a monitor, illustrating the modality of correction of the image therein, according to the second embodiment of the invention;
Figures 4 and 5 are diagrammatic illustrations of the movement of the image in the display of the monitor in Figures 3A and 3B, according to two different modalities of implementation.

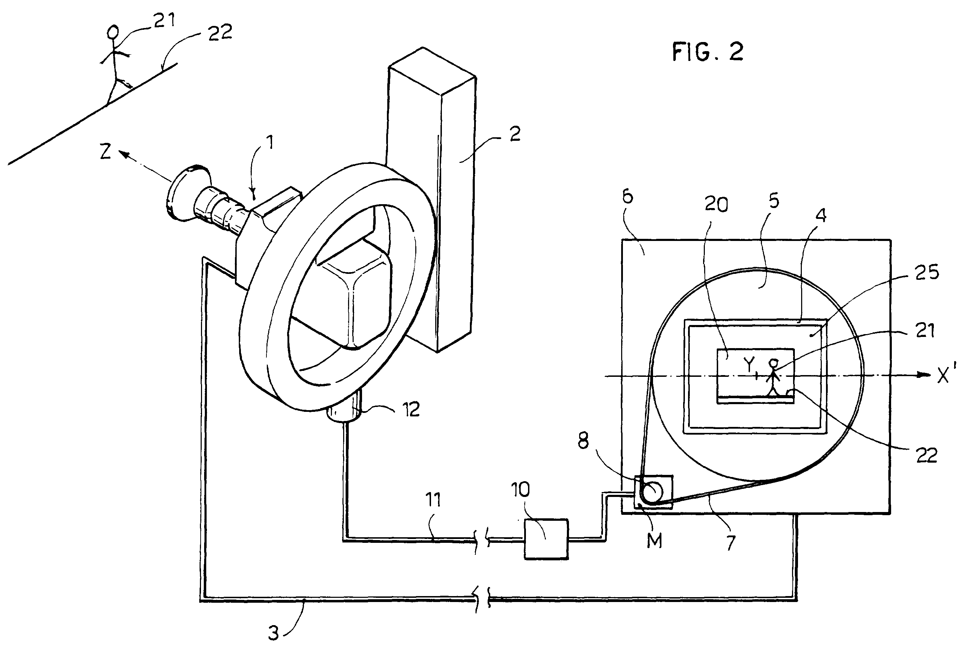

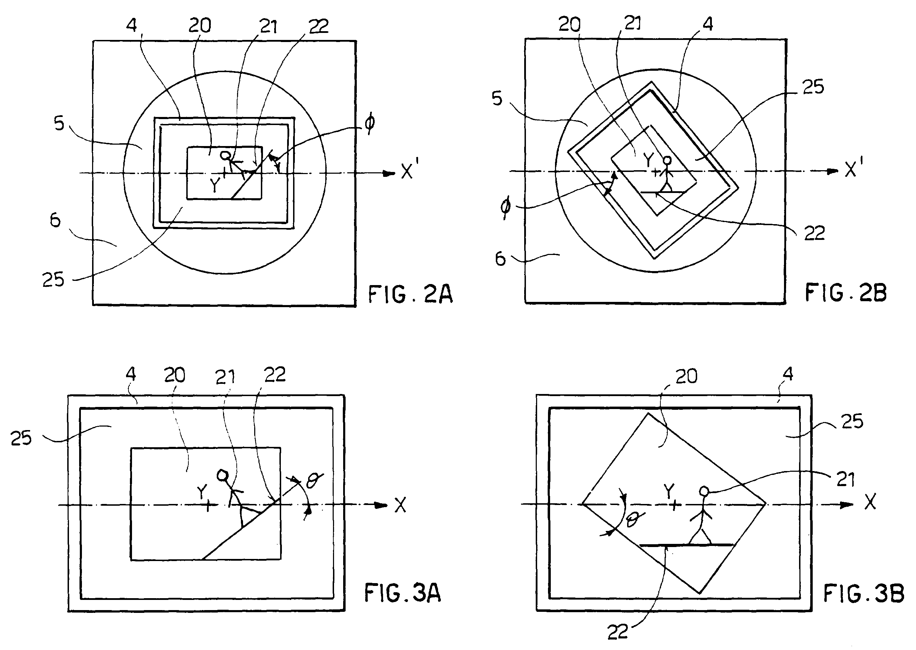

With reference to Figure 2, a telecamera 1 is mounted rotatable on a fixed mount 2 so as to be free to turn around an axis Z to carry out the ROLL movement. The telecamera 1 is connected by means of an electrical connecting line 3, such as a coaxial cable for example, to a monitor 4. The monitor 4 is provided with a display 25 in which a substantially rectangular shaped image 20 is formed, where the subjects filmed by the telecamera 1 appear. Purely by way of example, the telecamera 1 is filming a subject 21 placed on a horizontal plane 22.

The monitor 4 is fixed to a mount 5 which is rotatably mounted on a fixed frame 6. The mount 5 of the monitor 4 is set in rotation by means of a belt 7 driven by a pinion 8 set in rotation by the shaft of a motor M. The motor M is set in motion by an actuating means or an encoder 10. The actuating means 10 is connected by means of an electrical transmission line 11 to movement detector means 12 positioned in the telecamera 1 and able to detect the ROLL movement of the telecamera 1.

When, by means of a manual control, a joystick or a remote control, the operator imparts the ROLL movement, causing rotation around the axis Z of the telecamera 1 or of the image sensor of the telecamera, the means of detection 12 detect this movement and through the connection line 11 send an electrical signal to the actuating means 10. The actuating means 10 decodes said signal and sets in rotation the motor M and thus the pinion 8 that drives the belt 7. The actuating means 10 is programmed in such a manner that the mount 5 integral with the monitor 4 makes a rotation characterized by an angle and a direction of rotation equal to those of the ROLL rotation performed by the telecamera 1. In this manner the monitor 4 comes to be in an identical situation to that in which it would be if it were integral with the telecamera 1. For an operator in front of the monitor 4, because of the rotation of the monitor and therefore of the image 20 formed in the display 25, the subject 21, inside the image 20, seems fixed even during the ROLL movement of the telecamera 1.

When an operator imparts a ROLL movement to the telecamera 1 equivalent to a rotation through an angle φ in a clockwise direction around the axis Z, as shown in Figure 2A, the horizontal 22 of the subject 21 turns in an anticlockwise direction by an angle φ with respect to the horizontal axis of the fixed frame 6 (which is shown with a dashed line and indicated with the letter X'). The movement detector means 12 detect the rotation of the telecamera 1 through an angle φ and send a signal to the actuating means 10. The actuating means 10, on the basis of the signal received, orders a rotationof the motor M such as to make the monitor 4 rotate in a clockwise direction by an angle equal to φ. In this manner, as shown in Figure 2B, the monitor 4 is rotated by an angle φ in a clockwise direction with respect to the horizontal axis X' of the fixed frame 6 and therefore the horizontal 22 of the subject 21 again becomes substantially parallel to the horizontal axis X'.

Obviously Figures 2A and 2B are illustrative of the modality of correction. In fact the controls used for the purpose cause the subject in the image in the monitor always to remain fixed. An operator who is in front of the monitor 4, therefore, when looking at the image 20 does not perceive any rotation of the subject 21 framed by the telecamera that is making the ROLL movement. The framed subject 21 appears fixed in the monitor 4, whereas the monitor 4 turns integrally with the mount 5. The only effect noted by the operator is therefore the rotation of the monitor 4.

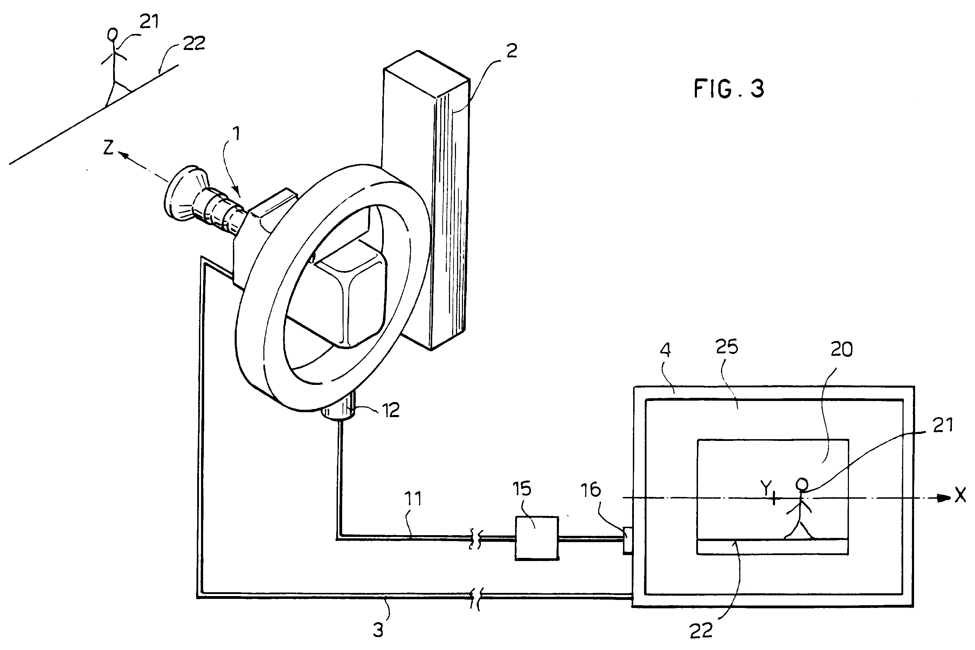

Figure 3 shows a further embodiment of the invention in which elements that are the same or similar have been identified with the same reference numerals as in the embodiment in Figure 2. With reference to Figure 3, the telecamera 1 is framing a subject 21 placed on a horizontal plane 22 and on the display of the monitor 4 an image 20 appears showing the subject 21 on the horizontal plane 22 substantially parallel to the horizontal axis of the monitor 4 (indicated with a dashed line and with the letter X). The movement detector means 12 of the telecamera 1 are connected to a decoder 15 that sends control signals to an electronic image processing device 16 connected to the monitor 4. The device 16, by acting on the pixels of the image 20 that appears on the display 25, is able to turn it through a desired angle.

When an operator imparts to telecamera 1 a ROLL movement equivalent to a rotation through an angle θ in an anticlockwise direction around the axis Z, as shown in Figure 3A, the horizontal 22 of the subject 21 turns in an anticlockwise direction through an angle θ with respect to the horizontal axis X of the monitor 4. The movement detector means 12 detect the rotation of the telecamera 1 by an angle θ and send a signal to the decoder 15 which decodes said signal and accordingly sends control signals to the image processing means 16. The means 16, according to the signals received, work out a rotation of the image 20 in a clockwise direction by an angle equal to θ. In this manner, as shown in Figure 3B, the image 20 is rotated by an angle θ in a clockwise direction with respect to the horizontal axis X of the monitor 4 and therefore the horizontal 22 of the subject 21 returns substantially parallel to the horizontal axis X. Obviously Figures 3A and 3B are illustrative of the correction modality. In fact the automatic controls used for the purpose cause the subject in the image in the monitor to remain fixed. An operator who is in front of the monitor 4, therefore, looking a the image 20 does not perceive any rotation of the subject 21 framed by the telecamera that is carrying out the ROLL movement. The framed subject 21 appears fixed in the monitor 4, whereas the image 20 turns. The only effect noted by the operator is therefore the rotation of the frame surrounding the image 20.

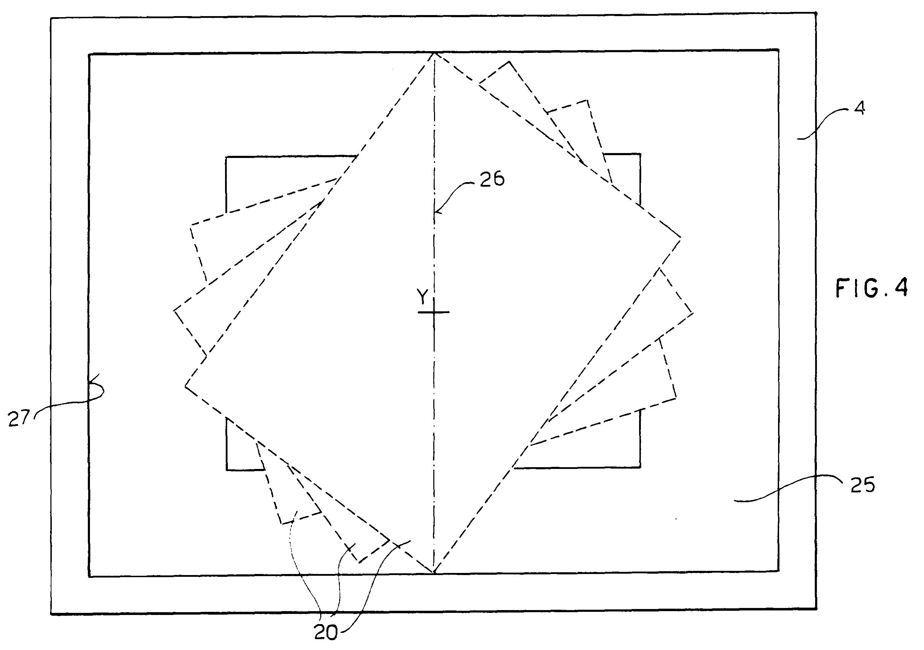

With reference to Figure 4, if the surface of the image 20 is substantially rectangular in shape, in order not to have cutting of the corners of the surface of the image 20 during rotation thereof around the axis Y at right angles to the display 25 of the monitor 4 and coinciding with the center of the image 20, the diagonal 26 of the surface of the image must be smaller than the smallest side 27 of the display 25 of the monitor 4.

Clearly, if cutting of the corners of the image is considered of no importance, embodiments of the invention can be envisaged in which the diagonal 26 is greater than the smaller side 27 of the display 25 of the monitor 4.

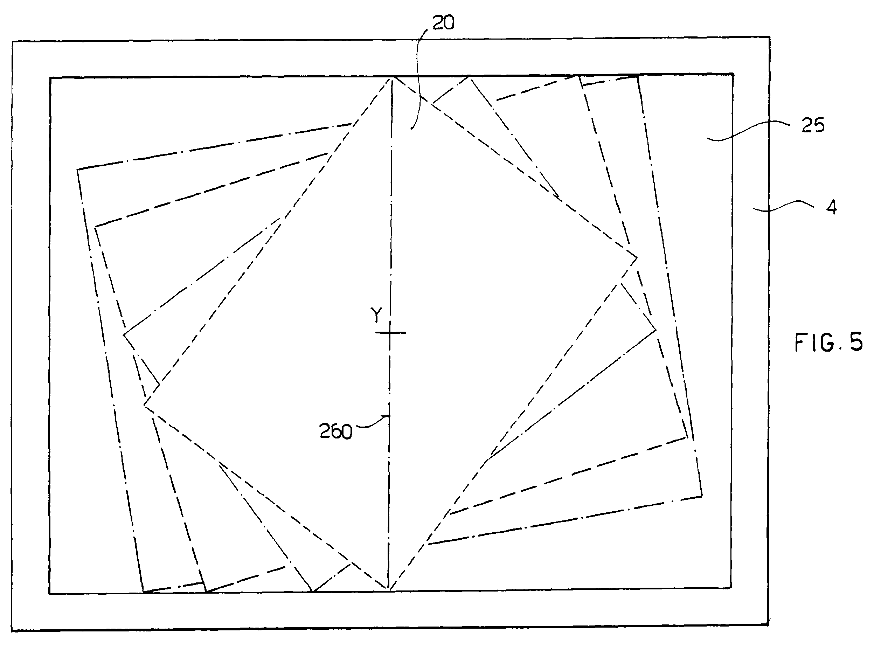

In Figure 5 another possibility of rotating the image in the monitor without cutting it is illustrated, consisting in dynamically changing the size, so as to have the maximum dimensions compatible with its angular position in the monitor at all times. In practice, the length of the diagonal 260 of the rectanle enclosing the image varies dynamically during rotation, so that the rectangle of the image 20 always remains inscribed in the external frame of the display 25 of the monitor, with two opposite vertices thereof in contact with the longer edges of said frame.

Embodiments can be provided in which the surface of the image and/or the surface of the display have a substantially circular shape such that the image can occupy the largest surface available in the display without being cut.

## Claims

1. A device for stabilizing the image (20) in a monitor (4) physically separate from a telecamera or cinecamera (1), during the ROLL movement of the latter, characterized in that it comprises stabilizing means able to obtain rotation of the image (20) around an axis (Y), substantially at right angles to the display (25) of the monitor (4) and coinciding with the center of the image (20), in order to avoid the occurrence, inside the image (20), of rotation of the subject (21) framed by the telecamera (1) during the ROLL movement of the telecamera.

2. A device according to claim 1, characterized in that said stabilizing means are such as to impart a rotation of the image (20) exactly corresponding to that of the ROLL movement of the telecamera.

3. A device according to claim 1 or 2, characterized in that said stabilizing means comprise means for making the monitor rotate around said axis (Y).

4. A device according to claim 3, characterized in that said means for making the monitor (4) rotate comprise a mount (5) for the monitor, mounted on a fixed frame (6), so that it is able to rotate around said axis (Y) by means of a motor (M).

5. A device according to claim 4, characterized in that said motor (M) is driven by an actuating means or encoder (10) that is piloted by movement detector means (12) able to detect the ROLL movement of the cinecamera or telecamera (1).

6. A device according to claim 1 or 2, characterized in that said stabilizing means comprise an image processing device (16) able to make the image (20) rotate electronically around said axis (Y).

7. A device according to claim 1 or 2, characterized in that said image processing device (16) receives control signals from movement detector means (12) able to detect the ROLL movement of said telecamera or cinecamera (1).

8. A device according to claim 6 or 7, characterized in that the image (20) has constant dimensions, the diagonal thereof being smaller than or equal to the shorter side (27) of the display (25) of the monitor (4).

9. A device according to claim 6 or 7, characterized in that the image (20) is dynamically variable in size so that it is always inscribed in the external frame of the display (25) of the monitor (4), with two opposite vertices thereof always in contact with the larger sides of said frame.

10. A method of stabilizing the image (20) in a monitor (4), physically separate from a telecamera or cinecamera, during the ROLL movement of the latter, characterized in that it provides for a rotation of the image (20) around an axis (Y) substantially at right angles to the display (25) of said monitor (4) and coinciding with the center of the image (20) so as to avoid the occurrence, inside the image (20), of rotation of the subject (21) framed by the telecamera (1) during the ROLL movement of the telecamera.

11. A method according to claim 10, characterized in that said rotation of the image (20) corresponds exactly to that of the ROLL movement of the telecamera.

12. A method according to claim 10 or 11, characterized in that said rotation of the image (20) is obtained by making the monitor (4) rotate physically around said axis (Y).

13. A method according to claim 12, characterized in that it comprises the following steps:
detection of the ROLL movement of the telecamera (1) by means of movement detector means (12);
sending by the detector means (12) of a signal complying with the ROLL movement detected to an actuating means or encoder (10);
operation, by the actuating means or the encoder (10) of a motor (M) that imparts to the monitor (4) a rotation around the axis (Y) equal to the ROLL rotation of the telecamera (1).

14. A method according to claim 10 or 11, characterized in that said rotation of the image (20) is obtained by making the image (20) rotate electronically around said axis (Y) maintaining the monitor still.

15. A method according to claim 14, characterized in that during the electronic rotation of the image provision is made for dynamic changing of the size thereof.

16. A method according to claim 14 or 15, characterized in that it comprises the following steps:
detection, by means of movement detection means (12), of the ROLL movement of the telecamera (1);
sending by the detector means (12) of a signal corresponding to the ROLL movement detected to an image processing device (16) that performs a rotation of the image around the axis (Y) equal to the ROLL rotation of the telecamera.
